# EUROPÄISCHE PATENTSCHRIFT

(11) **EP 2 650 192 B1**
(45) Veröffentlichungstag und Bekanntmachung des Hinweises auf die Patenterteilung: **27.06.2018**
(21) Anmeldenummer: 13161612.0
(22) Anmeldetag: 28.03.2013
(51) Int. Cl.: B62B 3/14, B62B 5/04

(54) **Transportwagen**
Transport trolley
Chariot de transport

(30) Priorität: 11.04.2012 DE 102012103090
(43) Veröffentlichungstag der Anmeldung: 16.10.2013
(73) Patentinhaber: Wanzl Metallwarenfabrik GmbH, 89340 Leipheim (DE)
(72) Erfinder: Paul, Jürgen, 87739 Breitenbrunn, OT Loppenhausen (DE)

(56) Entgegenhaltungen:
- EP-A1- 0 624 509
- EP-A1- 0 791 519
- EP-B1- 1 590 224
- DE-A1- 19 506 847
- DE-A1-102008 045 144
- DE-U1- 8 804 327

## Beschreibung

Die Erfindung betrifft einen stapelbaren Transportwagen mit einem Fahrgestell mit nach oben strebenden Holmen die eine Schiebeeinrichtung tragen und mit einem Abstellbereich für Ware oder Gepäck, weiters mit Knotenstücken zur Befestigung der Holme und des Abstellbereiches, wobei jedes Knotenstück mehrteilig ausgeführt ist. Einen derartigen Transportwagen zeigt die EP 0 624 509 A1. Ähnliche Transportwagen sind in Form von so genannten Gepäcktransportwagen aus dem Stand der Technik bekannt. Sie sind mit drei oder vier Rollen ausgestattet und weisen einen Abstellbereich in Form einer Ladeplattform auf. Ferner sind Holme vorgesehen, an denen eine Schiebeeinrichtung angeordnet ist. Als Verbindungsstücke von Abstellbereich und Holm sind Knotenstücke vorgesehen. Der Wagen kann ferner mit einer Bremsvorrichtung versehen sein, wobei die Bremsstangen in den zwei Holmen geführt sind und an ihrem unteren Ende einen Bremsschuh aufweisen. Die EP 0 722 846 B1 zeigt beispielsweise einen solchen Wagen mit einer Bremsvorrichtung. Die Knotenstücke bilden an dieser Stelle Raum für das geschützte Anordnen der unteren Enden der Bremsstangen, die mit dem Bremsschuh versehen sind, welcher jeweils auf die hinteren Rollen des Wagens wirkt. Wird eine Reihe solcher gestapelter Wagen bewegt, ist es notwendig, dass die hinteren Rollen eines Wagens angehoben sind, denn die Bremse wirkt auf die Rollen, solange sie nicht durch Herunterdrücken der Schiebeeinrichtung gelöst wird.

In einer weiterführenden Variante eines Wagens, wie z.B. in der EP 1 590 224 B1 beschrieben, ist die Bremsvorrichtung zusätzlich mit einer Bremslöseeinrichtung, die mit dem Bremsschuh oder direkt mit der Bremsstange zusammenwirkt, und einem Auslöseteil unterhalb der Ladeplattform ausgestattet. In gestapeltem Zustand wird die Bremse durch Einwirken des Auslöseteils auf die Bremslöseeinrichtung gelöst. Dadurch kann eine Reihe an gestapelten Wagen auf einfache Art transportiert werden.

Darüber hinaus ist aus dem Stand der Technik und insbesondere der DE 195 06 847 A1 bekannt, dass ein Knotenstück eines solchen Transportwagens z.B. aus zwei Halbschalen gebildet ist. Als Material für das Herstellen solcher Halbschalen als Spritzgussformteil hat sich ein Leichtmetall, wie Aluminium, oder auch ein Kunststoff als sinnvoll erwiesen. Die Holme und auch die Ladeplattform können auf einfache Art in das Knotenstück gesteckt werden und dann ggf. mittels einer zusätzlichen Schraube, mittels einer Klebung oder bei geeigneter Materialauswahl auch durch Schrumpfung gesichert werden. Bei der Verwendung solcher Halbschalen und dem einfachen Ineinanderstecken der Bauteile kann auf ein Zusammenschweißen der Bauteile verzichtet werden.

Die Aufgabe der vorliegenden Erfindung liegt nun darin, einen Transportwagen mit einem verbesserten Knotenstück aufzuzeigen, das zudem bei den beiden oben beschriebenen Wagentypen eingesetzt werden kann.

Die Erfindung löst die Aufgabe mit den Merkmalen im Hauptanspruch. Weitere vorteilhafte Ausführungen sind in den Unteransprüchen beschrieben.

Die Bauteile können auf einfache Art und Weise zusammengefügt werden. Hierfür weisen die äußeren Teile Verzahnungen auf, die in die Öffnungen des mittleren Bauteils eingreifen können.

Weitere Befestigungen sind nicht notwendig. Auf aufwendiges Schweißen kann verzichtet werden.

Je nach Wahl des mittleren Bauteils kann ein solches, aus mehreren Bauteilen gebildetes Knotenstück, sowohl für Wagen mit aber auch ohne Bremslöseeinrichtung verwendet werden.

Die Erfindung wird anhand von zwei Ausführungsbeispielen näher erläutert. Es zeigt
- Fig. 1: einen ersten Transportwagen mit einem erfindungsgemäßen Knotenstück in perspektivischer Ansicht,
- Fig. 2: denselben Transportwagen in einer weiteren perspektivischen Ansicht,
- Fig. 3: denselben Transportwagen in Rückansicht,
- Fig. 4: denselben Transportwagen in Draufsicht,
- Fig. 5: ein Knotenstück des Transportwagens in Explosionsdarstellung,
- Fig. 6: einen zweiten Transportwagen mit einem erfindungsgemäßen Knotenstück in perspektivischer Ansicht,
- Fig. 7: denselben Transportwagen in einer weiteren perspektivischen Ansicht,
- Fig. 8: ein Knotenstück des Transportwagens in Explosionsdarstellung,
- Fig. 9: das Knotenstück des Transportwagens in einer weiteren Explosionsdarstellung, sowie
- Fig. 10: eine weitere Variante eines mittleren Bauteils des Knotenstücks in Explosionsdarstellung.

Die Erfindung betrifft einen stapelbaren Transportwagen 1, 1' mit einem Fahrgestell 2, das mit nach oben strebenden Holmen 4 ausgestattet ist, die eine Schiebeeinrichtung 3 tragen. Ferner weist das Fahrgestell 2 einen Abstellbereich 5 für Ware, Gepäck und dergleichen auf. Der Abstellbereich 5 und die Holme 4 führen in Knotenstücke 6. Hierfür weist jedes Knotenstück 6 einen Befestigungsbereich 6.4 zum Tragen eines Holmes 4 und einen weiteren Befestigungsbereich 6.5 zum Tragen einer Strebe des Abstellbereichs 5 auf.

Das Knotenstück 6 ist hierfür mehrteilig ausgeführt, es ist aus mindestens zwei Bauteilen, einem äußeren Bauteil 6.1 und einem mittleren Bauteil 6.2" oder aber aus zwei äußeren Bauteilen 6.1 und 6.3, sowie einem mittleren Bauteil 6.2 oder 6.2' gebildet.

Das Knotenstück 6 ist aus mindestens zwei Bauteilen gebildet.

In einer Variante weist das Knotenstück 6 ein äußeres Bauteil 6.1 und ein mittleres Bauteil 6.2" auf.

In einer anderen Variante ist das Knotenstück 6 aus zwei äußeren Bauteilen 6.1 und 6.3, sowie einem mittleren Bauteil 6.2 bzw. 6.2' gebildet.

Die Bauteile 6.1, 6.2 und 6.3 bzw. 6.1, 6.2' und 6.3 oder 6.1 und 6.2" werden ineinander gesteckt. Hierfür sind die äußeren Bauteile 6.1 und 6.3 mit Verzahnungen 7 ausgestattet, die in das mittlere Bauteil 6.2, 6.2' oder 6.2" eingreifen.

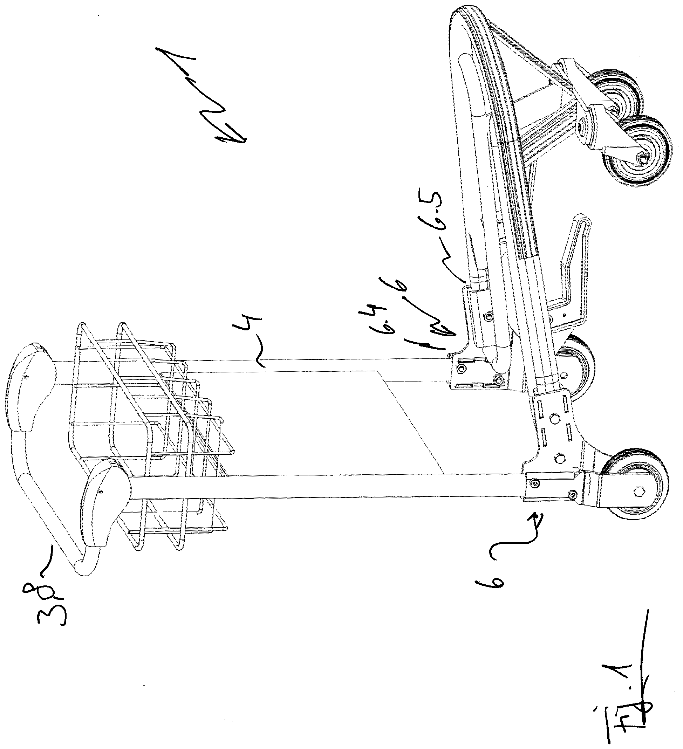

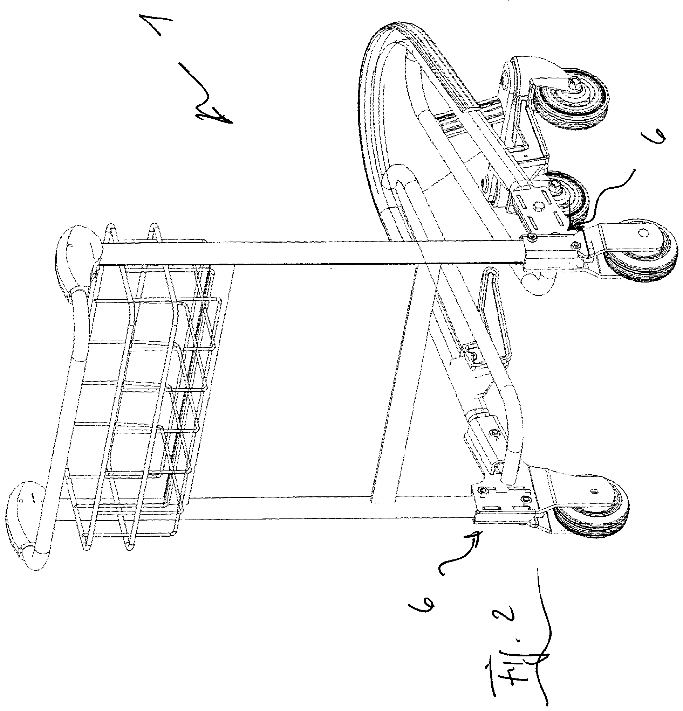

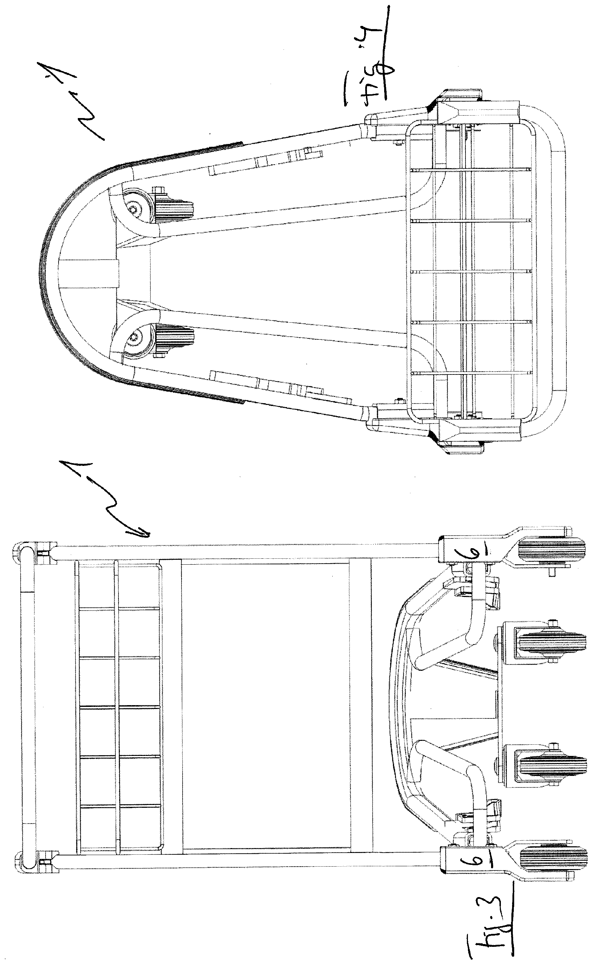

Die Figuren 1 bis 4, 6 und 7 zeigen einen solchen Transportwagen 1,1'. In den Figuren 1 bis 9 ist ein Knotenstück 6 dargestellt, das aus drei Bauteilen 6.1, 6.2 oder 6.2' und 6.3 gebildet ist.

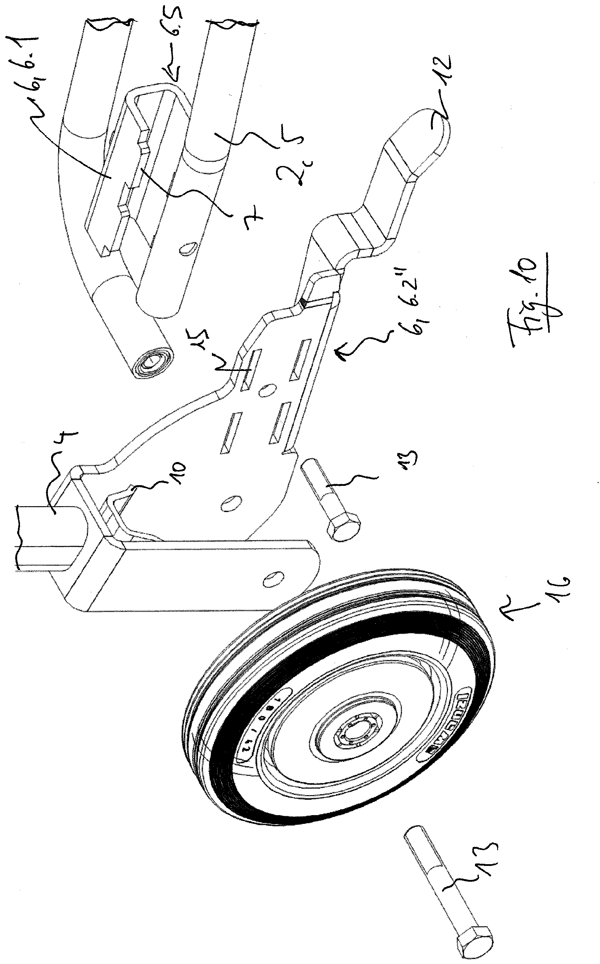

Figur 10 zeigt eine weitere Variante eines mittleren Bauteils 6.2".

Unabhängig von der Anzahl der Bauteile werden diese ineinander gesteckt.

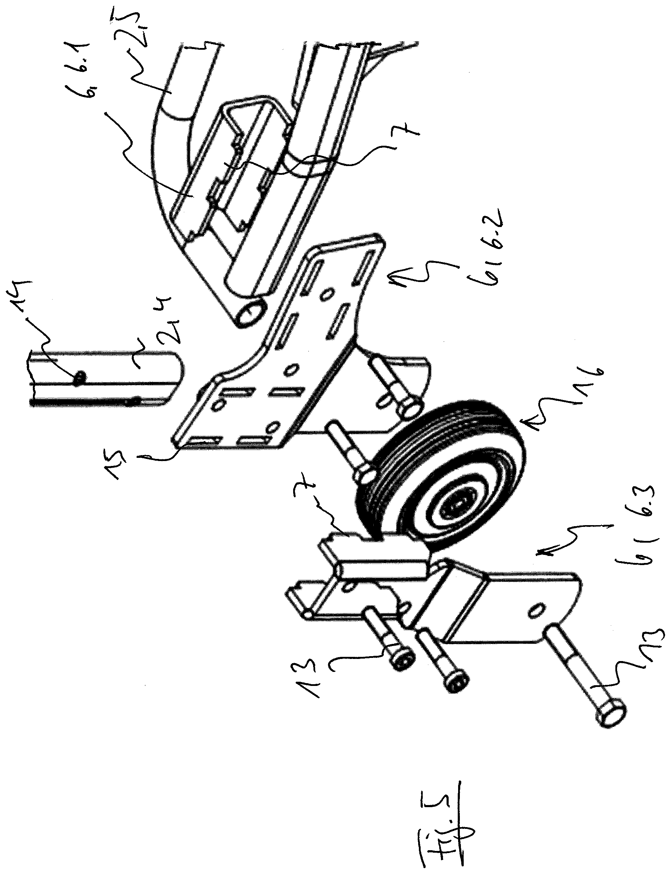

In den Figuren 5 und 8 bzw. 9 ist jeweils ein solches Knotenstück 6 dargestellt. Das Knotenstück 6 ist aus drei Bauteilen, zwei äußeren 6.1, 6.3 und einem mittleren 6.2 bzw. 6.2' gebildet. Die Bauteile 6.1, 6.2 bzw. 6.2' und 6.3 werden ineinander gesteckt. Die beiden äußeren Bauteile 6.1 und 6.3 sind hierfür mit Verzahnungen 7 ausgestattet, die in das mittlere Bauteil 6.2 bzw. 6.2' eingreifen und die Bauteile 6.1, 6.2 bzw. 6.2' und 6.3 miteinander verbinden.

Jeder Transportwagen 1, 1' ist vorzugsweise mit einer durch die Schiebeeinrichtung 3 betätigbaren Bremsvorrichtung 8 versehen. Die Bremsvorrichtung 8 ist mit zwei in den Holmen 4 befindlichen Bremsstangen 9 ausgestattet, an deren unterem Ende jeweils ein auf ein Hinterrad des Wagens 1,1' einwirkender Bremsschuh 10 angeordnet ist.

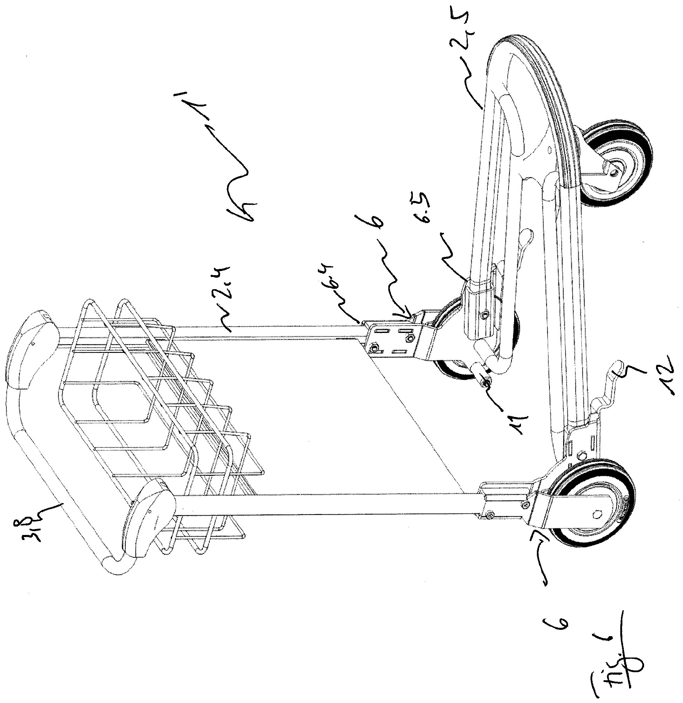

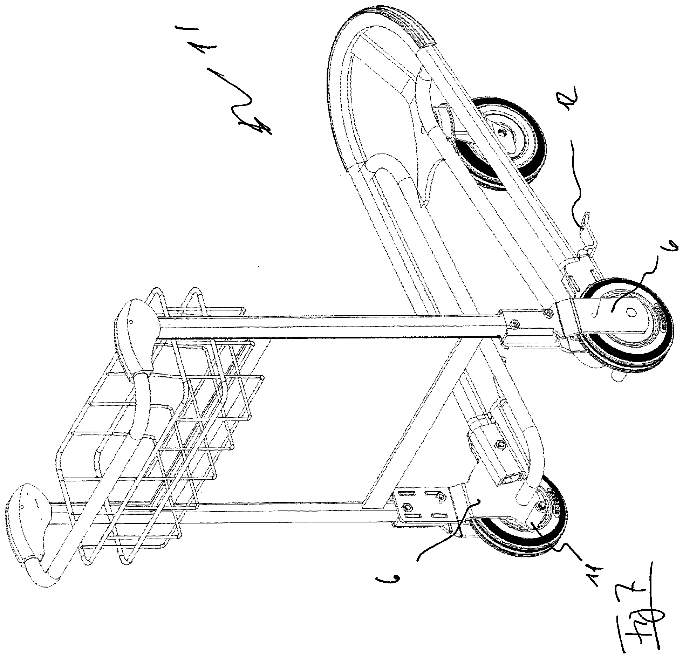

Der in den Figuren 6 und 7 dargestellte Transportwagen 1' ist mit einer Bremslösevorrichtung 11 ausgestattet. Darüber hinaus ist bei einem solchen Wagen 1' ein Auslöseteil 12 vorgesehen.

Wie aus den Darstellungen 8 und 9 hervorgeht, sind die Bremslösevorrichtung 11 und das Auslöseteil 12 Bestandteile des mittleren Teiles 6.2', 6.1". Es hat sich als sinnvoll erwiesen, dass das mittlere Teil 6.2' und die Bremslösevorrichtung 11 aus einem Teil gebildet sind und dass das Auslöseteil 12 an dem mittleren Teil 6.2' angebracht wird.

Hinsichtlich der Montage werden zunächst das äußere Teil 6.1 und das mittlere Teil 6.2 bzw. 6.2' miteinander verbunden, nachdem ein Ende des Abstellbereichs 5 in das äußere Teil 6.1 gelegt wurde. Die Form des äußeren Teils 6.1 ist somit angepasst an die Form der Verstrebungen des Abstellbereichs 5. In den Darstellungen weist das äußere Teil 6.1 einen rechteckigen Querschnitt auf, wobei zwei der Seitenwände mit den Verzahnungen 7 versehen sind. Diese Verzahnungen 7 sind durch verlängerte Überhänge der beiden Seitenwände gebildet. Sie greifen in die Öffnungen 15 des mittleren Teils 6.2 bzw. 6.2' ein. Die Bauteile 6.1 und 6.2, 6.2', 6.2" bilden somit einen Befestigungsbereich 6.5 für den Abstellbereich 5 und einen Befestigungsbereich 6.4 für den Holm 4. Ein einfaches Anordnen von Holm 4 und Abstellbereich 5 ist somit gewährleistet.

Die Länge und die Höhe des äußeren Teils 6.1 sind abhängig von dem Querschnitt der Verstrebungen des Abstellbereichs 5.

Dann wird jeweils eine hintere Rolle 16 an dem mittleren Teil 6.2 bzw. 6.2' montiert. Dies geschieht unter Zuhilfenahme des äußeren Teils 6.3 und einem Sicherungsmittel 13. Gleichzeitig wie der Holm 4, der in seinem Inneren eine Bremsstange 9 aufweist, wird die Rolle 16 an den Bauteilen 6.2 bzw. 6.2' und 6.3 gesichert.

Die Bauteile 6.1, 6.2, 6.2', 6.2" sowie 6.3 können aus einem Aluminium- oder Zink-Druckguss hergestellt werden. Auch können es gelaserte Blechteile oder Prägeteile sein.

Es kann sich unter Umständen als sinnvoll erweisen, dass zusätzliche Sicherungsmittel 13 eingesetzt werden, die das Knotenstück 6 am Fahrgestell 2 zusätzlich sichern. Für die Aufnahme der zusätzlichen Sicherungsmittel 13 weisen sowohl die Bauteile 6.1, 6.2, 6.2', 6.2" und 6.3 als auch jeweils der Holm 4 und an entsprechender Stelle der Abstellbereich 5 Bohrungen 14 auf.

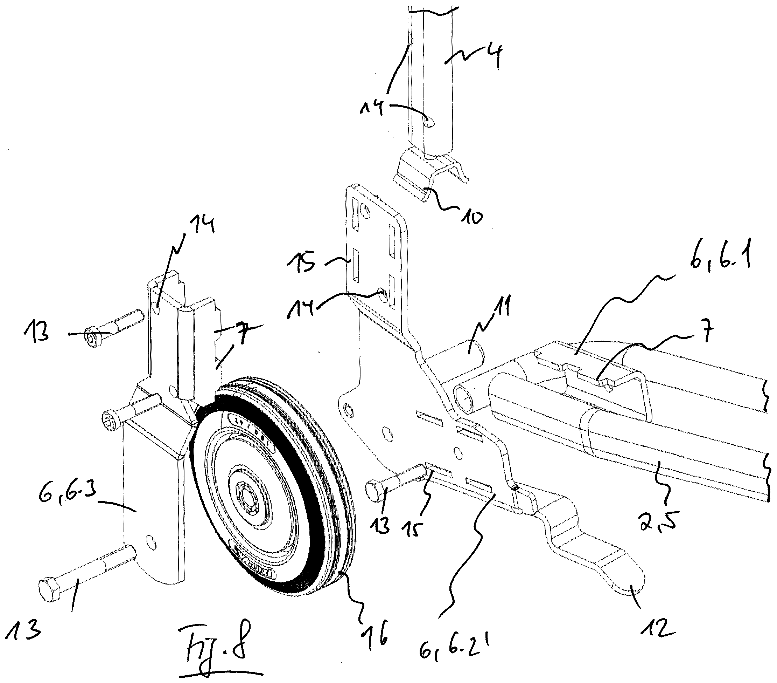

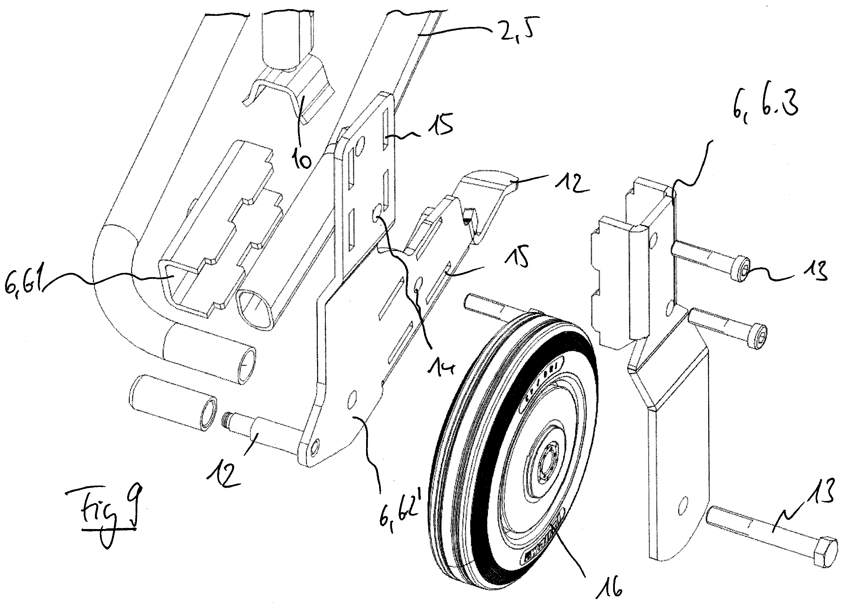

Aus den Figuren 8 und 9 geht hervor, dass das äußere Bauteil 6.1 weitestgehend waagrecht am mittleren Bauteil 6.2, 6.2' angeordnet ist und in der unteren Hälfte des mittleren Bauteils 6.2, 6.2' eingreift.

Das äußere Bauteil 6.3 ist weitestgehend senkrecht am mittleren Bauteil 6.2, 6.2' angeordnet und greift in der oberen Hälfte des mittleren Bauteils 6.2, 6.2' ein.

Zum sicheren Eingreifen der äußeren Bauteile 6.1 und 6.3 weisen diese Verzahnungen 7 auf. Eine Anzahl von vier Verzahnungen 7 pro Bauteil 6.1, 6.3 hat sich als sinnvoll erwiesen. Zur Aufnahme der äußeren Bauteile 6.1, 6.3 weist das mittlere Bauteil 6.2, 6.2' Öffnungen 15 auf, so dass die Verzahnungen 7 in die Öffnungen 15 eingreifen können. Eine Anzahl von acht Öffnungen 15, entsprechend der Anzahl der Verzahnungen 7 beider Bauteile 6.1 und 6.3, hat sich als sinnvoll erwiesen.

Wie aus Figur 10 hervorgeht, ist bei Verwendung des mittleren Teiles 6.2" kein weiteres äußeres Teil 6.3 notwendig. Auch das mittlere Teil 6.2" weist Öffnungen 15 auf. Diese nehmen die Verzahnungen 7 des äußeren Teils 6.1 auf. Hierfür reicht eine Anzahl von vier Öffnungen 15 aus, die in der unteren Hälfte des mittleren Teiles 6.2" waagrecht angeordnet sind. Das mittlere Teil 6.2" ist einteilig gebildet, ein Auslöseteil 12 angeformt. Die Bremslösevorrichtung 11 kann, wie bei der anderen Variante, angebracht werden. Sicherungsmittel 13 für die Anordnung der Rolle 16 oder zur zusätzlichen Sicherung können bei Bedarf vorgesehen werden.

### Bezugszeichenliste

- 1,1': Transportwagen
- 2: Fahrgestell
- 3: Schiebeeinrichtung
- 4: Holm
- 5: Abstellbereich
- 6: Knotenstück
- 6.1: äußeres Bauteil / Teil
- 6.2, 6.2', 6.2": mittleres Bauteil / Teil
- 6.3: äußeres Bauteil / Teil
- 6.4: Befestigungsbereich (Holm)
- 6.5: Befestigungsbereich (Abstellbereich)
- 7: Verzahnung
- 8: Bremsvorrichtung
- 9: Bremsstange
- 10: Bremsschuh
- 11: Bremslösevorrichtung
- 12: Auslöseteil
- 13: Sicherungsmittel
- 14: Bohrungen
- 15: Öffnungen
- 16: Rollen

## Patentansprüche

1. Transportwagen (1, 1') mit einem Fahrgestell (2), wobei das Fahrgestell (2) mit nach oben strebenden Holmen (4) ausgestattet ist, die eine Schiebeeinrichtung (3) tragen, und wobei das Fahrgestell (2) einen Abstellbereich (5) für Ware, Gepäck und dergleichen aufweist, ferner führen Abstellbereich (5) und Holme (4) in Knotenstücke (6), wobei jedes Knotenstück (6) einen Befestigungsbereich (6.4) zum Tragen eines Holmes (4) und einen weiteren Befestigungsbereich (6.5) zum Tragen des Abstellbereichs (5) aufweist, wobei das Knotenstück (6) mehrteilig ausgeführt ist, wobei das Knotenstück (6) aus mindestens zwei Bauteilen gebildet ist, wobei das Knotenstück (6) aus einem äußeren Bauteil (6.1) und einem mittleren Bauteil (6.2") oder aber aus zwei äußeren Bauteilen (6.1. 6.3), sowie einem mittleren Bauteil (6.2. 6.2') gebildet ist, wobei die Bauteile (6.1, 6.2, 6.2', 6.2". 6.3) ineinander gesteckt werden,
wobei das äußere Bauteil (6.1) weitestgehend waagrecht am mittleren Bauteil (6.2, 6.2', 6.2") angeordnet ist und in das mittlere Bauteil (6.2, 6.2', 6.2") eingreift und einen Befestigungsbereich (6.5) für den Abstellbereich (5) bildet, und wobei die äußeren Bauteile (6.1. 6.3) mit Verzahnungen (7) ausgestattet sind, die in das mittlere Bauteil (6.2, 6.2', 6.2") eingreifen.

2. Transportwagen nach Anspruch 1, **dadurch gekennzeichnet, dass** eine durch die Schiebeeinrichtung (3) betätigbare Bremsvorrichtung (8) vorgesehen ist, die mit zwei in den Holmen (4) befindlichen Bremsstangen (9) ausgestattet ist, an deren unterem Ende jeweils ein auf ein Hinterrad einwirkender Bremsschuh (10) angeordnet ist.

3. Transportwagen nach Anspruch 2, **dadurch gekennzeichnet, dass** eine Bremslösevorrichtung (11) vorgesehen ist.

4. Transportwagen nach einem der vorhergehenden Ansprüche, **dadurch gekennzeichnet, dass** ein Auslöseteil (12) vorgesehen ist.

5. Transportwagen nach Anspruch 3 und 4, **dadurch gekennzeichnet, dass** die Bremslösevorrichtung (11) und das Auslöseteil (12) Bestandteile des mittleren Bauteils (6.2', 6.2") sind.

6. Transportwagen nach einem der vorhergehenden Ansprüche, **dadurch gekennzeichnet, dass** zusätzliche Sicherungsmittel (13) eingesetzt werden, die das Knotenstück (6) am Fahrgestell (2) zusätzlich sichern.

7. Transportwagen nach Anspruch 6, **dadurch gekennzeichnet, dass** zur Aufnahme der zusätzlichen Sicherungsmittel (13) sowohl die Bauteile (6.1, 6.2, 6.2', 6.2", 6.3) als auch jeweils der Holm (4) und der Abstellbereich (5) an entsprechender Stelle Bohrungen (14) aufweisen.

8. Transportwagen nach Anspruch 1, **dadurch gekennzeichnet, dass** das weitere äußere Bauteil (6.3) weitestgehend senkrecht am mittleren Bauteil (6.2, 6.2') angeordnet ist und in der oberen Hälfte des mittleren Bauteils (6.2, 6.2') eingreift.

9. Transportwagen nach einem der vorhergehenden Ansprüche, **dadurch gekennzeichnet, dass** die äußeren Bauteile (6.1, 6.3) jeweils vier Verzahnungen (7) und das mittlere Bauteil (6.2, 6.2') acht Öffnungen (15) aufweisen, so dass die Verzahnungen (7) in die Öffnungen (15) eingreifen können.

## Claims

1. A trolley (1, 1') having a wheel frame (2), wherein the wheel frame (2) is equipped with upwardly-extending uprights (4) which bear a pushing arrangement (3), and wherein the wheel frame (2) has a deposit region (5) for goods, luggage and the like, furthermore deposit region (5) and uprights (4) run into joint pieces (6), wherein each joint piece (6) has a securing region (6.4) for bearing an upright (4) and another securing region (6.5) for bearing the deposit region (5), wherein the joint piece (6) is multi-part, wherein the joint piece (6) is formed from at least two component parts, wherein the joint piece (6) is formed from an outer component part (6.1) and a middle component part (6.2") or else from two outer component parts (6.1, 6.3) and a middle component part (6.2, 6.2'), wherein the component parts (6.1, 6.2, 6.2', 6.2", 6.3) are put into one another, wherein the outer component part (6.1) is arranged on the middle component part (6.2, 6.2', 6.2") in a horizontal manner to the greatest possible extent and engages the middle component part (6.2, 6.2', 6.2") and forms a securing region (6.5) for the deposit region (5), and wherein the outer component parts (6.1, 6.3) are equipped with teeth (7) which engage the middle component part (6.2, 6.2', 6.2").

2. A trolley according to claim 1, **characterised in that** a brake device (8) actuatable by the pushing arrangement (3) is provided, which brake device (8) is equipped with two brake rods (9) located in the uprights (4), a brake shoe (10) which acts upon a rear wheel being arranged at the lower end of the brake rods (9) in each case.

3. A trolley according to claim 2, **characterised in that** a brake release device (11) is provided.

4. A trolley according to any one of the preceding claims, **characterised in that** a triggering part (12) is provided.

5. A trolley according to claim 3 and 4, **characterised in that** the brake release device (11) and the triggering part (12) are components of the middle component part (6.2', 6.2").

6. A trolley according to any one of the preceding claims, **characterised in that** additional securing means (13) are used, these additionally securing the joint piece (6) to the wheel frame (2).

7. A trolley according to claim 6, **characterised in that** to receive the additional securing means (13), both the component parts (6.1, 6.2, 6.2', 6.2", 6.3) and in each case the upright (4) and the deposit region (5) have bores (14) at an appropriate site.

8. A trolley according to claim 1, **characterised in that** the additional outer component part (6.3) is arranged on the middle component part (6.2, 6.2') in a perpendicular manner to the greatest possible extent and engages the upper half of the middle component part (6.2, 6.2').

9. A trolley according to any one of the preceding claims, **characterised in that** the outer components parts (6.1, 6.3) each have four teeth (7) and the middle component part (6.2, 6.2') has eight openings (15), so that the teeth (7) can engage the openings (15).

## Revendications

1. Chariot de transport (1, 1') muni d'un châssis de roulement (2), ledit châssis de roulement (2) étant doté de montants (4) pointant vers le haut et portant un dispositif de poussée (3), et ledit châssis de roulement (2) présentant une zone (5) de stockage de marchandises, de bagages et objets similaires, ladite zone de stockage (5) et lesdits montants (4) fusionnant par ailleurs dans des pièces nodales (6), chaque pièce nodale (6) comprenant une zone de fixation (6.4) affectée au support d'un montant (4) et une zone supplémentaire de fixation (6.5) dévolue au support de ladite zone de stockage (5), la pièce nodale (6) étant réalisée en plusieurs parties, ladite pièce nodale (6) étant formée d'au moins deux éléments structurels, ladite pièce nodale (6) étant constituée d'un élément structurel extérieur (6.1) et d'un élément structurel médian (6.2"), ou bien de deux éléments structurels extérieurs (6.1, 6.3), ainsi que d'un élément structurel médian (6.2, 6.2'), lesquels éléments structurels (6.1, 6.2, 6.2', 6.2", 6.3) sont emboîtés les uns dans les autres, sachant que l'élément structurel extérieur (6.1) occupe une position majoritairement horizontale sur l'élément structurel médian (6.2, 6.2', 6.2"), pénètre dans ledit élément structurel médian (6.2, 6.2', 6.2") et forme une zone de fixation (6.5) dédiée à la zone de stockage (5), et sachant que les éléments structurels extérieurs (6.1, 6.3) sont pourvus de dentures (7) qui pénètrent dans ledit élément structurel médian (6.2, 6.2', 6.2").

2. Chariot de transport selon la revendication 1, **caractérisé par le fait qu'**il est prévu un dispositif de freinage (8) pouvant être actionné par l'intermédiaire du dispositif de poussée (3) et équipé de deux tiges de freinage (9) qui sont logées dans les montants (4), et à l'extrémité inférieure desquelles se trouve un patin respectif de freinage (10) agissant sur une roue arrière.

3. Chariot de transport selon la revendication 2, **caractérisé par** la présence d'un dispositif (11) de desserrage du frein.

4. Chariot de transport selon l'une des revendications précédentes, **caractérisé par** la présence d'une pièce de déclenchement ou de libération (12).

5. Chariot de transport selon les revendications 3 et 4, **caractérisé par le fait que** le dispositif (11) de desserrage du frein et la pièce de déclenchement ou de libération (12) font partie intégrante de l'élément structurel médian (6.2', 6.2").

6. Chariot de transport selon l'une des revendications précédentes, **caractérisé par** l'utilisation de moyens d'arrêt (13) supplémentaires, qui arrêtent additionnellement la pièce nodale (6) sur le châssis de roulement (2).

7. Chariot de transport selon la revendication 6, **caractérisé par le fait que** les éléments structurels (6.1, 6.2, 6.2', 6.2", 6.3), tout comme le montant (4) considéré et la zone de stockage (5), comportent des perçages (14) en un emplacement correspondant, en vue de recevoir les moyens d'arrêt (13) supplémentaires.

8. Chariot de transport selon la revendication 1, **caractérisé par le fait que** l'élément structurel extérieur (6.3) supplémentaire occupe une position majoritairement verticale sur l'élément structurel médian (6.2, 6.2'), et pénètre dans la moitié supérieure dudit élément structurel médian (6.2, 6.2').

9. Chariot de transport selon l'une des revendications précédentes, **caractérisé par le fait que** les éléments structurels extérieurs (6.1, 6.3) sont respectivement munis de quatre dentures (7), et l'élément structurel médian (6.2, 6.2') est percé de huit orifices (15), de telle sorte que lesdites dentures (7) puissent pénétrer dans lesdits orifices (15).
